Europäisches Patentamt

European Patent Office

Office européen des brevets

(11) Publication number: **0 474 131 A2**

# EUROPEAN PATENT APPLICATION

(21) Application number: **91114618.1**

(22) Date of filing: **30.08.91**

(51) Int. Cl.⁵: **G06F 9/46**

(30) Priority: **04.09.90 US 577339**

(43) Date of publication of application:
**11.03.92 Bulletin 92/11**

(84) Designated Contracting States:
**AT BE CH DE DK ES FR GB GR IT LI LU NL SE**

(71) Applicant: **BMC Software, Inc.**
**1 Sugar Creek Boulevard Center Suite 500**
**Sugarland Texas 77478(US)**

(72) Inventor: **Stacy, Roger A.**
**12323 Deforrest Street**
**Houston, Texas 77066(US)**
Inventor: **Mead, Phillip R.**
**2222 South Piney Point, No. 106**
**Houston, Texas 77063(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86(DE)**

(54) **System for enhancing data transfer between application programs and communications programs in telecommunications systems.**

(57) A method, and a computer program system for performing the method, enhances the transfer of data streams between application programs and communications programs in telecommunications systems. The enhancer system is interposed between a host computer network communications program, such as VTAM, and the application program being used for accommodating data transfer requests from end users in the VTAM environment. The enhancer system intercepts data RECEIVE requests from the application program to the communications program. A corresponding receive-accept-ed data signal is relayed to the application program, thereby allowing that program to continue execution without awaiting a response to its RECEIVE request. The enhancer system interacts with the communications program to realize the transfer of requested data therefrom when it becomes available. The requested data is subsequently transferred to the application program by interrupting the normal operation thereof and causing the program to generate appropriate RECEIVE requests responsive to which the sequential transfer of requested data occurs.

FIG. 1

The present invention relates generally to telecommunications systems wherein peripheral devices communicate with host computers through host-resident application programs. More particularly, the present invention relates to a system for enhanced data transfer between such host-resident application programs and the communications program used within the host computer for establishing the requisite communications interface between the host computer and the peripheral units.

Various schemes, such as the popular Systems Network Architecture (SNA), are presently used for the transmission of information units through and controlling the configuration and operation of networks which interconnect a plurality of peripheral devices, preferably through a central host unit or storage/control station. Schemes such as SNA define the logical structure, formats, protocols and operational sequences for achieving the requisite information or data transfer. SNA networks generally form segments of a user-application network conforming to SNA formats and protocols, enable reliable data transfer among end users, and establish protocols for controlling the resources of various network configurations.

SNA networks may be single-domain networks using a single focal point known as the System Services Control Point (SSCP) for managing network configuration, coordinating operator requests, and providing directory support and other session services for end users of the network. SNA networks may also be multiple-domain networks using several cooperating SSCPs operating under a hierarchial arrangement for dividing the network into domains of control.

In SNA networks of the above kind, specialized communications programs are typically used for controlling communication and the flow of data in a network. A widely used communications program for this purpose is the Virtual Telecommunication Access Method (VTAM) which is marketed by IBM and provides single-domain, multiple-domain, and interconnected network capability. End users acting through peripheral devices in such telecommunications networks typically interact with a host computer or central storage/control unit or with each other by means of application programs. These programs act as an intermediary for directing data transfer requests between an end user and the communications program, such as VTAM, through which the desired transfer of data streams is realized.

While communications programs, in general, and VTAM, in particular, generally provide efficient control of communication and data flow in SNA networks, certain problems are encountered in processing multiple data requests from end users and realizing the requested data transfer asynchronously from the communications program to the applications program through which the requests are initiated. In particular, the processing of data transfer requests is problematic in telecommunications systems connecting a host computer with addressable-buffer devices where optimizer programs are used for increasing multi-user system efficiency by avoiding unnecessary data transmission. An exemplary optimizer system of this type is disclosed in U.S. Patent No. 4,750,137 to Harper et al., assigned to BMC Software, Inc., which is also the assignee of all rights to the subject invention. The '137 patent discloses the use of an optimizer program which is resident in the host computer memory and is interposed between a host computer application program and the telecommunications link connecting the computer with an addressable-buffer terminal device such as a screen-display terminal. The optimizer program essentially causes the host computer to (i) divert outgoing data streams prior to transmission thereof to a terminal device, (ii) generate corresponding optimized data streams conforming to the communications protocol in use, and (iii) transmit the optimized data streams in lieu of the original data streams. The disclosure in the '137 patent is incorporated herein by reference.

In optimizer-based telecommunication systems of the above-referenced type, the application programs exchange data streams with communications programs such as VTAM. Accordingly, processing of asynchronous data transfer requests from end users is further complicated because of the execution of the optimizing process as part of the transfer of requested data between the applications program and VTAM.

Briefly, in accordance with the present invention, the foregoing problems are addressed by means of an enhancer program or process interposed between a host computer network communications program or process, such as VTAM, and the application program or process through which data transfer requests from end users are accommodated.

The enhancer includes a computer program which remains resident in the host computer memory and intercepts all data receive requests ("RECEIVES") from the application program to the communications program or VTAM. For each such request, the enhancer itself marks the receive as being accepted (thereby emulating a function of the communications program) and returns a corresponding "receive accepted" data signal to the application program, whereupon the application program is free to continue normal execution without being required to await the results of its receive request.

Interception of data requests from the application program is accomplished by the enhancer following the stage when the application program is linked to the communications program by the definition of an appropriate interface module associated therewith. The interface module is edited in such a manner that when a data request comes in and is directed to the module, it is immediately diverted to the enhancer. After the enhancer program has been executed, control is handed back to the interface module. Preferably, interception is realized by means of a program which, after the communications program has been generated, locates the associated interface module and edits it prior to linkage editing thereof. Accordingly, when the edited module is linked into the communications program library, the enhancer program is also linked therewith. Thus, subsequent RECEIVE requests are intercepted automatically and branched to the enhancer, and the interface module code is executed only after the enhancer has completed its operation.

When a RECEIVE request from the application program is accepted by the enhancer, the enhancer checks to see whether or not requested data is available. If such data is not available, the RECEIVE request is processed for being passed to the communications program in the form of an appropriately structured RECEIVE instruction specifying the enhancer exit which needs to be driven when the data subsequently becomes available. If, however, the requested data is available, the enhancer generates an INQUIRE instruction which is forwarded to the communications program for generating a work unit and a data unit therefrom. Subsequently, the enhancer relays a signal to the application program indicative of the fact that the original request has been accepted, whereupon the application program continues its normal execution routine.

When some or all of the requested data blocks become available at the communications program, the program drives the enhancer RECEIVE exit specified by the earlier-processed RECEIVE requests from the application program. All available data blocks are subsequently transferred to and temporarily stored by the enhancer through the use of synchronous RECEIVE requests from the enhancer to the communications program. At this point, the stored plurality of data blocks corresponding to a request is preferably processed by an optimizer program of the type used for increasing multi-user system efficiency by avoiding unnecessary data transmission between a host computer and terminal units linked thereto.

The processed data is then moved to appropriate storage buffers within the application program after the enhancer has driven the RECEIVE exit for the application program. The application program then receives the requested data blocks and, if it is determined that all the requested data has not in fact been received, generates additional RECEIVE signals which are again intercepted by the enhancer and processed in accordance with the above-described routine. The presence of additional data to be transmitted from the communications program to the application program, however, subsequently results in the generation of the INQUIRE to the communications program and the associated return of the signal to the application program indicating receipt of the request signal. Thus, when the next block of requested data is available, the communications program drives the earlier-specified INQUIRE exit of the enhancer and the associated routines are reiterated until all requested data blocks have in fact been received by the application program, thereby marking the point where the requested input transaction is totally satisfied.

Accordingly, even in the case of multiple requested data blocks, the enhancer efficiently interacts with the communications program to realize the transfer of requested data blocks when they become available. In effect, each time the application program generates a receive, the enhancer intercepts the request and "tricks" the application program into believing that the communication program did in fact accept the request. Accordingly, the application program can continue its normal execution sequence until requested data becomes available. At that time, the enhancer interrupts the operation of the application program and causes it to generate appropriate RECEIVE requests responsive to which the sequential transfer of requested data may subsequently occur.

The basic features and advantages of the present invention will become apparent in the following detailed description and upon reference to the drawings in which:

FIG. 1 is a simplified block diagram representing a telecommunication system in which an enhancer program in accordance with the present invention is interposed between a host application program and associated communications program;

FIG. 2 is a flow chart illustrating the basic operation of the enhancer in establishing data transfer between the application program and the communications program; and

FIG. 3 is a flow chart specifically illustrating the sequence according to which the requested data is transferred from the communications program through the enhancer to the application program.

While the invention is susceptible to various modifications and alternative forms, specific embodiments thereof have been shown by way of example in the drawings and will herein be described in detail. It should be understood, however, that it is not intended to limit the invention to the particular forms disclosed. On the contrary, the intention is to cover all modifications, equivalents, and alternatives falling within the spirit and scope of the invention as defined by the appended claims.

## General System Description

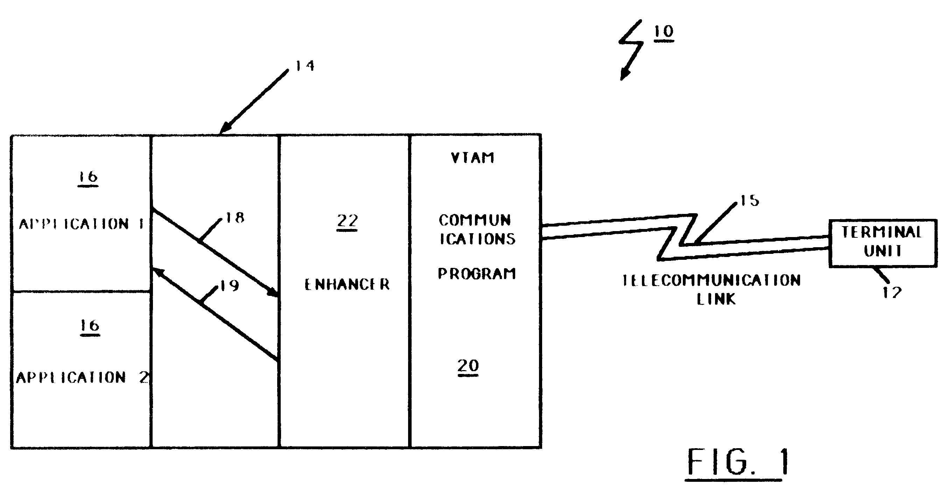

Referring now to the drawings, and in particular to FIG. 1, there is shown a telecommunications system 10 which includes a terminal unit 12 in communication with a host computer 14 through a conventional communication link 15. While only a single terminal unit 12 has been illustrated in FIG. 1, it should be noted that a plurality of such units would frequently be interfaced through appropriate communication links to the host or associated central storage/control station based on the logical formats, protocols and operational sequences conforming to the particular network architecture such as SNA, adopted for the network.

In an SNA network implementation of the telecommunications system shown in FIG.1, a specialized communications program 20, such as VTAM, is associated with the host computer for controlling communication and the flow of data in the network. The transfer of data streams based upon communication requests from terminal units 12 (which may be passive devices or active logic units) is typically accomplished by means of one or more host-resident applications or applications programs 16. These programs exchange data streams, as indicated by the directional lines 18 and 19, with the communications program 20.

It will be apparent to those skilled in the art having the benefit of this disclosure that the applications program 16 and the communications program 20 may be of any particular type appropriate to the particular host computer 14 and the specific network implementation (SNA or the like) used with the communications system. Accordingly, these programs are not disclosed or described in detail herein but, instead, are discussed only generally for purposes of explanation. It should also be noted that the description herein related to the communications program 20 is made with particular reference to VTAM for purposes of illustration only and without any intention of being restricted thereto. It will further be appreciated that the enhancer system disclosed and claimed herein is not limited to the illustrative implementation of FIG. 1 in which the application programs 16, the communications program, and the enhancer described below in detail are shown and discussed as being implemented on a single host computer.

## Telecommunication/Application Software Interface

In the operation of a telecommunications system of the type described above, the application programs 16 are specifically adapted for interaction with the particular communications program 20 being used with the system. More specifically, the application programs are capable of identifying themselves to the communications program and issuing instructions conforming to the format and protocol used by the communications program. With particular reference to VTAM, the application programs 16 operate on the basis of macro instructions (instructions in a source language that are replaced by a defined sequence of instructions in the same source language and which may also specify parameter values in the defined instructions) which are specific to the VTAM environment.

As an illustrative example, such an application program initially uses an OPEN instruction which effectively associates the application program with VTAM so that the program can use the various facilities in the VTAM environment. More specifically, the OPEN instruction specifies at least one application control block (ACB) which links the application program to VTAM and specifically points to a location in program memory which contains the symbolic name by which the application program is identified to VTAM. This application program identification is specified in the APPLID parameter of the ACB macro instruction. For purposes of this disclosure, the term APPLID is used to generally refer to an application program which has effectively been identified to VTAM using appropriate parameters in the VTAM definition stage. In addition, interaction between an application program and the VTAM communication program typically involves a definition of a request parameter list (RPL) which contains the parameters necessary for processing a request for data transfer, for establishing or terminating a session or for some other operation. A variety of such macro instructions, including various instructions necessary for activating and driving appropriate program exit routines ("EXIT"), are used for satisfying communication requests from terminal units. These instructions and the manner in which they are used in the operation of multi-user networks are well known in the art and, accordingly, are not discussed in detail herein.

## Enhancer Program

Returning to FIG. 1, data transfer requests from an application program which are directed to VTAM are intercepted by an enhancer program 22. As shown in FIG. 1, the enhancer program 22 is interposed between a host application program 16 and the communications program 20, i.e., VTAM. The enhancer 22 essentially comprises a computer program which remains resident in the host computer memory and intercepts all data receive requests ("RECEIVES") from the application program to VTAM. Where the request pertains to data, a RECEIVE, essentially, requests VTAM to transfer a request or a response to the application program's data area.

It should be noted that the RECEIVE instruction is one of the macro instructions used in the VTAM environment by an application program for communicating with logical units after an appropriate ACB has been opened for the application program and a session established with one or more logical units. The RECEIVE macro instruction is essentially a read request in response to which VTAM obtains the name of the identity of the particular session from the RPL, if a specific session is addressed. As described above, the RPL contains the address of an ACB and the identity of the session with respect to the application program initiating the request.

The RECEIVE macro instruction itself furnishes the address of the RPL which includes fields containing parameters that specify exactly how the requested operation should be performed by VTAM. On completion of a requested operation, the feedback information generated by VTAM is positioned in the RPL for examination by the application program. In realizing data transfer between the application program and VTAM, the RECEIVE instructions relayed from the application program require a specific response thereto by specifying particular parameters in the associated macro instruction.

In accordance with the system of this invention, interception of data requests from an application program is accomplished by the enhancer following the ACB creation stage when the application is being linked to VTAM. When the ACB is created in response to an OPEN instruction as a communication session is initiated, an address is specified where a request for VTAM services may be made. More specifically, the ACB includes an address of a VTAM entry point corresponding to a piece of VTAM code which is stored in system memory in association with a VTAM interface module. Interception is accomplished by editing the VTAM interface module and, more specifically, the object code representative thereof, in such a manner that when a data request comes in, it is immediately diverted to the enhancer program. After the enhancer program has been executed, control is handed back to the VTAM interface module.

In accordance with the system of this invention, the front end of the object code in the VTAM interface module, which is generally a piece of character-type text, is edited and overlaid with replacement code which specifies a branch to the address where the enhancer program is located. As a result, RECEIVE requests from the application program result in a branch directing them, not to the VTAM interface module code, but to the enhancer program itself.

It should be noted that the editing of the object code in the VTAM interface mode can be realized by any of several conventional module front-ending techniques well known to those of ordinary skill in the art. For instance, the object code may be edited directly by replacing the first few bytes (for instance, the first four bytes) of the VTAM interface module object code with a branch instruction to the enhancer program, and the next few bytes (again, for instance, the next four bytes) with a specification of the location to be branched back to from the enhancer program. Alternatively, a program may be run at system initiation which accesses the interface module and dynamically changes the object code therein appropriately.

In accordance with a preferred embodiment of the present invention, the above-described interception is realized by means of a program which, after the VTAM system has been initialized, locates the VTAM interface module and edits it according to conventional techniques prior to link editing thereof. As a result, when the edited module is linked into the VTAM library, the enhancer program code is also linked therewith. Any subsequently RECEIVE requests are thus intercepted and diverted to the enhancer program and the VTAM interface module code is executed only after the enhancer program has completed its operation.

As will be described in detail below, the enhancer essentially responds to an intercepted RECEIVE signal in such a way that the application program receives information that its request was, in fact, accepted by VTAM so that the program may continue its normal execution sequence without waiting for VTAM itself actually to respond. The enhancer subsequently acts upon the RECEIVE request by interrupting the application program and realizing the transfer of requested data thereto if the data are available from VTAM at the time of the request. This is accomplished by a series of INQUIRE instructions sent from the enhancer to VTAM which drive an exit of the enhancer which, in turn, drives the RECEIVE RPL exit of the application program which, in turn, generates corresponding RECEIVE instructions responsive to which the actual data transfer sequentially occurs. If, however, the requested data are not available from VTAM, the enhancer causes VTAM to act upon the RECEIVE signal and to notify the enhancer when the requested response becomes available. At that time, the enhancer again interrupts the operation of APPLID and brings about the transfer of requested data using the INQUIRE/RECEIVE instruction cycle.

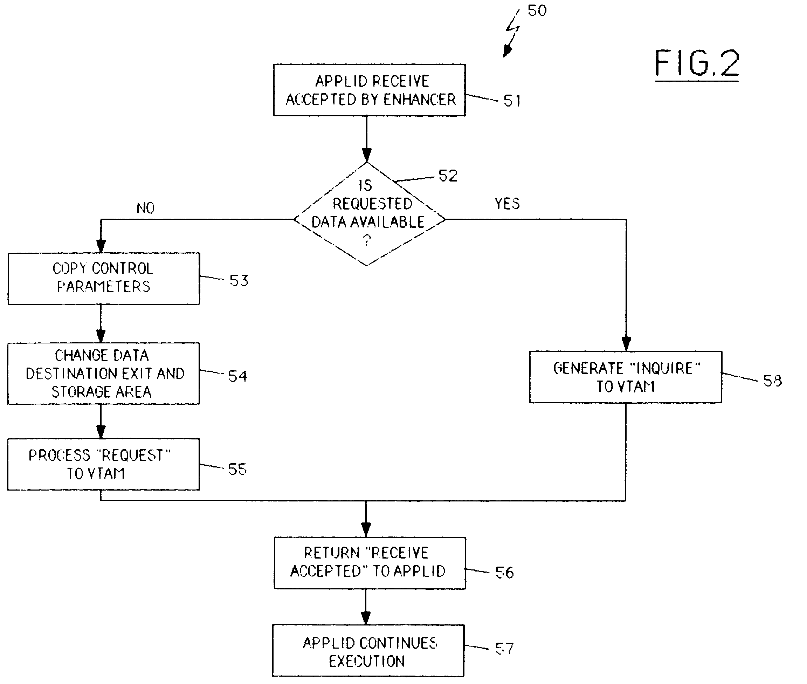

Referring now to FIG. 2, there is shown a flow chart illustrating the basic operation of the enhancer in acting upon data transfer requests between the application and the VTAM communications programs. The sequence of operation 50 is initiated by the receipt of a RECEIVE from the application program, i.e., the APPLID, by the enhancer at step 51. As noted above, the enhancer receives such a RECEIVE by virtue of the interception of the APPLID RECEIVE originally directed to VTAM toward utilization of VTAM resources and transfer of data therefrom. Initially, the enhancer makes a determination, at step 52, as to whether or not the requested data is available on the basis of a data availability signal discussed in detail below.

If the data is not available, the RECEIVE instruction is processed for being passed to VTAM in the form of an appropriately structured RECEIVE instruction specifying the enhancer exit which needs to be driven when the data subsequently becomes available. More specifically, at step 53, the RPL parameters from the original RECEIVE requests are copied for subsequent use in generating an appropriate inquire to VTAM. Next, at step 54, the destination exit and storage area specified by the RECEIVE are changed to correspond to those within the enhancer. Subsequently, at step 55, the RECEIVE request is processed to VTAM by generating a RECEIVE instruction which is sent to VTAM for generating a work unit corresponding to the requested data. This RECEIVE instruction corresponds to the RECEIVE instruction used by an application program for obtaining required information and having it positioned by VTAM in a specified memory area accessible to the program, and includes the specification of an enhancer exit scheduled to be driven in the future when required data does become available.

Next, at step 56, the enhancer relays a signal to the APPLID indicative of the fact that the original RECEIVE signal has been accepted, whereupon the APPLID continues its normal execution routine at step 57.

If, however, it is determined at step 52 that the requested data is available responsive to a RECEIVE signal from the APPLID, step 58 is accessed and the enhancer generates an "inquire" instruction which is sent to VTAM for generating an additional work or data unit therefrom. Subsequently, steps 56 and 57 are accessed again whereby the enhancer respectively relays a "RECEIVE ACCEPTED" signal to the APPLID indicating that the original signal has, in fact, been accepted, and the APPLID continues its normal execution routine.

The action of the enhancer at step 58 initiates an interruption of the normal operating sequence of the APPLID by effectively simulating the action of a conventional interrupt request block (IRB) which typically suspends normal execution of an application routine and also defines the action to be taken as the result of the interruption. The generation of an INQUIRE instruction to VTAM by the enhancer brings about the required IRB-equivalent action. The RPL for the INQUIRE instruction specifies an enhancer exit to be driven upon completion of the INQUIRE. This enhancer exit is designed to drive in turn the RECEIVE exit of the APPLID, thereby to eventually cause the generation of a new RECEIVE instruction from the APPLID in order to insure transfer of an additional block of requested data from VTAM to the APPLID.

The above arrangement, thus, realizes the transfer of multiple blocks of requested data by stimulating the APPLID to sequentially generate receive requests responsive to which the transfer of the requested data occurs. Since the APPLID's RECEIVE exit cannot be driven in the absence of any outside "stimulus" for affecting the same, the generation of the INQUIRE signal to VTAM functions as a means for generating such a "stimulus" whereby an INQUIRE exit is created for being driven at a subsequent point in time when the required work unit becomes available for being transferred.

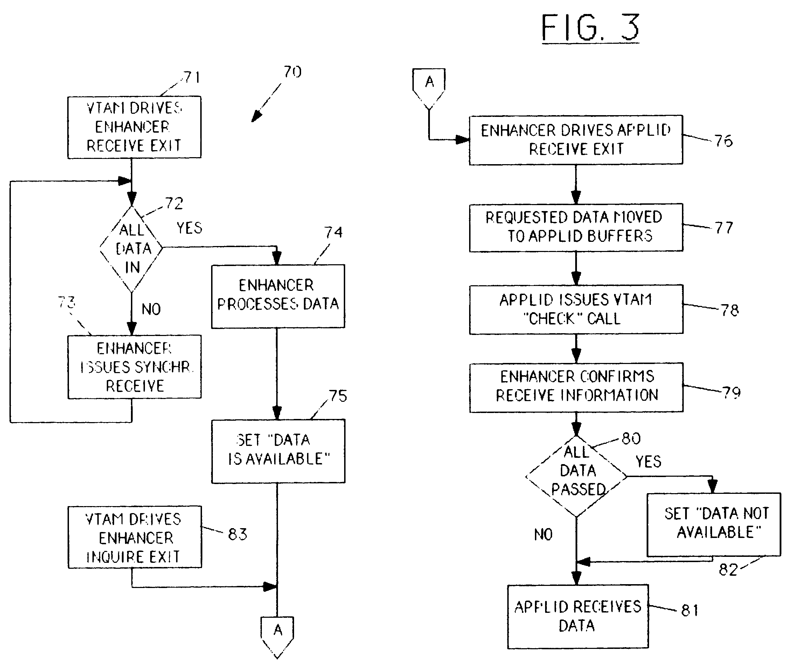

Referring now to FIG. 3, there is shown a flowchart 70 illustrating the sequence according to which data is transferred from VTAM to the enhancer to the application program, i.e., the APPLID. The flow of operations is initiated at step 71 when data requested from VTAM is ready. At that point, VTAM drives the enhancer RECEIVE exit specified by the earlier-processed RECEIVE signals from the APPLID. Accordingly, step 71 is accessed when VTAM has some, but not necessarily all, requested data available to be transferred. A block of available data is then received and stored temporarily. At step 72, it is determined from the appropriate flags/bits in the associated RPL whether there is more data to be received from VTAM. This is accomplished by monitoring the first-in-chain (FIC), the middle-in-chain (MIC), or the last-in-chain (LIC) status of the data block, in accordance with conventional data transfer techniques.

If the result at step 72 is found to be negative, i.e., additional data is available from VTAM, step 73 is accessed where the enhancer issues a synchronous RECEIVE request to VTAM requiring VTAM to transfer the next block of data and the program reverts to step 72 for performing the data check again. The synchronous nature of the RECEIVE request at this point allows the system to exit back to VTAM while the VTAM data becomes available. When all data blocks from VTAM which are responsive to a RECEIVE are available and have sequentially been stored, the check at step 72 results in a positive answer indicative of the fact that all data responsive to an input transaction is ready.

Subsequently, at step 74, this complete set of the plurality of data blocks is processed by the enhancer, preferably by an optimizer program of the type noted above in connection with U.S. Patent No. 4,750,137, also assigned to BMC Software, Inc. Next, at step 75, a flag indicating the availability of all requested data is set. It is the status of this flag which is used as the basis for the data availability check at step 52 of the flow sequence of FIG. 2. At step 76, the enhancer drives the RECEIVE exit for the APPLID and, at step 77, the requested data is moved to appropriate buffers associated with the APPLID.

At step 78, the APPLID issues a VTAM "check" call for monitoring appropriate control parameters in a conventional manner to ascertain whether the RECEIVE instruction has been properly executed. The enhancer, at step 76, then provides confirmation of the proper execution of the RECEIVE instruction on the basis of the response provided by VTAM to the enhancer's RECEIVE instruction. Having received what it believes to be confirmation of proper execution of its RECEIVE instruction, the APPLID then stands available for receiving the complete block of requested data.

More specifically, at step 80, the enhancer makes a determination as to whether or not the complete set of available data has, in fact, been passed. If the answer at step 80 is found to be positive, i.e., all data has been passed, a flag indicating that no additional data is available is set at step 82. The status of this flag also serves as the basis for the data available check at step 52 of the flow sequence of FIG. 2. Following step 82 or pursuant to a negative answer at step 80, step 81 is accessed where the APPLID receives the block of data initially transferred out from the enhancer to the APPLID.

At this point in the flow sequence, the APPLID undergoes the standard check utilized by conventional application programs for ascertaining the receipt of the complete set of data blocks requested in correspondence to a RECEIVE signal. If, using such well known standard check routines, it is found that the APPLID has not received all blocks of data comprising the full set of originally requested data, the APPLID is stimulated to generate additional RECEIVE signals which are again intercepted by the enhancer and processed in accordance with the above-described routine of FIG. 2. More specifically, however, the presence of additional data to be transmitted to the APPLID realizes a positive answer at the data availability check of step 58 (FIG. 2) and subsequently results in the generation of the INQUIRE to VTAM and the associated return of the signal to the APPLID indicating receipt of the RECEIVE signal.

When the next block of requested data is available, VTAM drives the INQUIRE exit of the enhancer which is created in connection with step 58. This is represented by step 83 in the flow sequence of FIG. 3. Subsequently, steps 76-82 are sequentially executed as described above. When the data check performed by the APPLID following receipt of requested data at step 81 leads to a determination that all requested data has, in fact, been received by the APPLID, the input transaction is totally satisfied and all data temporarily stored at that point can be discarded. Accordingly, a different flow path is adopted in the flow sequence of FIG. 3 depending on whether the RECEIVE or the INQUIRE exit of the enhancer is driven by VTAM in response to a transaction request from the APPLID.

It will be evident from the foregoing that the enhanced data transfer system of this invention is particularly advantageous in effectuating data transfer when an optimizer of the type disclosed in the above-referenced '137 patent is interposed between an application program and a host-resident communications program such as VTAM. Although not illustrated in the arrangement of FIG. 1, in an optimizer-based telecommunications system of the type disclosed in the '137 patent, the enhancer system, in accordance with the present invention, will be interposed between the optimizer and the application programs through an appropriate interface.

In particular, the enhanced data transfer system can efficiently process a chain of requested data units or blocks which become available for transfer to the application program at the optimizer stage in response to corresponding RECEIVES from the application program. Even though data which has been acknowledged as sent from VTAM to the application program may remain at the optimizer stage within the communication pipeline prior to actually becoming available for transfer from the optimizer to the application program, the system appropriately interfaces with the application program for sequential reception of requested multiple data blocks at a point in time when the requested data has in fact been acted upon by the optimizer.

Those of ordinary skill having the benefit of this disclosure will recognize that many variations on the foregoing illustrative embodiment are possible without departing from the spirit of the invention. For example, functions described herein as being implemented in software can routinely and equivalently be implemented in hardware and vice versa, subject to normal performance constraints. The following claims are intended to encompass all such variations.

## Claims

1. A system for enhanced data transfer between an application process and a host communications interface process in a telecommunication system wherein the application process accommodates requests for data transfer between the communication process and the application process, said enhancing system comprising:

   an enhancer process interposed between said host communication process and said application process and programmed to

   intercept data receive requests from said application process to said communication process,

   relay an indication to said application process that said receive requests have been accepted by said communications process, whereby said application process may continue execution without awaiting a direct response from said communication process,

   interact with said communications process to realize the transfer of requested data therefrom when said data becomes available,

   interrupt the execution of said application process upon receipt of said requested data from said communications process, and

   transfer said requested data to said application process.

2. The data transfer enhanced system of claim 1 wherein said requested data comprises a plurality of data blocks, and said enhancer process is further programmed to

   issue a plurality of sequential receive requests to said communications process for sequentially receiving and storing said plurality of data blocks when they become available at said communications process,

   interrupt the application process after said plurality of requested data blocks has been received and stored,

   cause said application process to generate receive requests responsive to which sequential transfer of said stored requested data blocks can occur, and

   transfer said stored requested data blocks sequentially to said application process upon receipt of corresponding ones of said generated receive requests.

3. A method for enhancing data transfer between an application process and a host communications interface process in a telecommunication system wherein the application process accommodates requests for data transfer between the communications process and the application process, said enhancing method comprising the steps of:

   intercepting data receive requests from said application process to said communication process,

   relaying an indication to said application process that said receive requests have been accepted by said communications process, whereby said application process may continue execution without awaiting a direct response from said communications process,

   transferring requested data from said communications process when said data becomes available and temporarily storing said data,

   interrupting the execution of said application process upon receipt of said requested data from said communications process, and

   transferring said requested data to said application process.

4. The data transfer enhancing method of claim 3 wherein said requested data comprises a plurality of data blocks, and said method further comprises the steps of:

   issuing a plurality of sequential receive requests to said communications process for sequentially receiving and storing said plurality of data blocks when they become available at said communications process,

   interrupting the application process after said plurality of requested data blocks has been received and stored,

   generating receive requests from said application process responsive to which sequential transfer of said stored requested data blocks can occur, and

   transferring said stored requested data blocks sequentially to said application process upon receipt of corresponding ones of said generated receive requests.

FIG. 1

FIG.2

EP 0 474 131 A2

# FIG. 3

VTAM DRIVES ENHANCER RECEIVE EXIT — 71

70

ALL DATA IN — 72

YES

NO

ENHANCER ISSUES SYNCHR. RECEIVE — 73

ENHANCER PROCESSES DATA — 74

SET "DATA IS AVAILABLE" — 75

VTAM DRIVES ENHANCER INQUIRE EXIT — 83

A

ENHANCER DRIVES APPLID RECEIVE EXIT — 76

REQUESTED DATA MOVED TO APPLID BUFFERS — 77

APPLID ISSUES VTAM "CHECK" CALL — 78

ENHANCER CONFIRMS RECEIVE INFORMATION — 79

ALL DATA PASSED — 80

YES

NO

SET "DATA NOT AVAILABLE" — 82

APPLID RECEIVES DATA — 81